# EUROPÄISCHE PATENTSCHRIFT

(11) **EP 3 025 808 B1**
(45) Veröffentlichungstag und Bekanntmachung des Hinweises auf die Patenterteilung: **17.04.2019**
(21) Anmeldenummer: 15188233.9
(22) Anmeldetag: 02.10.2015
(51) Int. Cl.: B22D 31/00, B23K 20/233, B23K 20/12, F02B 77/00

(54) **VERFAHREN ZUM VERSCHLIESSEN EINER KERNLAGERÖFFNUNG EINES EINEN HOHLRAUM AUFWEISENDEN GUSSTEILES**
METHOD FOR CLOSURE OF A CORE BEARING OPENING OF A CAST PART HAVING A CAVITY
PROCEDE DE FERMETURE D'UNE OUVERTURE DE PORTEE DU NOYAU D'UNE PARTIE DE PIECE MOULEE PRESENTANT UN ESPACE CREUX

(30) Priorität: 25.11.2014 DE 102014223928
(43) Veröffentlichungstag der Anmeldung: 01.06.2016
(73) Patentinhaber: Volkswagen Aktiengesellschaft, 38440 Wolfsburg (DE)
(72) Erfinder: Rösch, Raimund, 37124 Rosdorf (DE); Brammer, Frank, 31177 Harsum (DE); Scheiper, Dirk, 31737 Rinteln (DE)

(56) Entgegenhaltungen:
- EP-A1- 1 510 280
- EP-A1- 1 688 207
- WO-A1-2013/185986
- DE-A1-102010 041 876
- US-A- 3 487 530
- US-A1- 2004 060 964

## Beschreibung

Die Erfindung betrifft ein Verfahren zum Verschließen einer Kernlageröffnung eines einen Hohlraum aufweisenden Gussteiles.

Zur Herstellung von Gussteilen mit Hohlräumen, beispielsweise von Zylinderköpfen, Zylinderkurbelgehäusen, E-Motorgehäusen etc., werden ein oder mehrere Gießkerne benötigt. Diese Gießkerne werden in einer als Kokille ausgebildeten Gießform mittels Kernlagern positioniert und stützen sich in der Gießform ab. Derartige Kernlager bestehen üblicherweise aus demselben Material wie der Kern, beispielsweise aus einem Gemisch aus Sand und einem Bindemittel, und werden nach Abschluss des Gießvorganges aus dem Gussteil entfernt. Hierdurch entstehen im Gussteil Öffnungen bzw. Durchbrechungen, welche im Folgenden als Kernlageröffnungen bezeichnet werden. Die Kernlageröffnungen müssen im Anschluss an den Gießvorgang sicher, dauerhaft und gegen flüssige Medien dichtend verschlossen werden. Hierzu werden die Kernlageröffnungen zunächst mechanisch bearbeitet und anschließend verdeckelt. Beim Verdeckeln wird ein meist aus Edelstahl bestehender Deckel durch Kleben oder durch eine Schrumpfpassung in der Kernlageröffnung fixiert. Vor dem Verdeckeln müssen bei der mechanischen Bearbeitung entstehende Späne aus der Kernlageröffnung bzw. dem Gussteil entfernt werden. Hieraus resultierend ergeben sich lange Prozesszeiten verbunden mit hohen Kosten. Durch die Verwendung von Deckeln aus Edelstahl - bei einem Zylinderkopf können beispielsweise zehn und mehr derartiger Deckel erforderlich sein - werden die Produktionskosten zusätzlich erhöht.

Alternativ werden zur Abstützung des bzw. der Kerne in der Gießform mitunter auch metallische Kernlager verwendet, welche beim Gießen von dem Gussmaterial eingeschlossen werden. Dabei treten aufgrund von sich bildenden Oxidschichten Probleme hinsichtlich der metallurgischen Anbindung zwischen dem Guss- und dem Kernlagermaterial auf.

Zur Lösung dieses Problems ist in der DE 10 2006 031 792 A1 ein Verfahren beschrieben, bei welchem eine eingegossene metallische Kernlagerung mit dem sie umgebenden Gussmaterial des Gussteiles verschweißt wird. Durch das Verschweißen werden beim Gießen entstandene Oxidschichten beseitigt, sodass eine metallurgisch dichte Anbindung zwischen Guss- und Kernlagermaterial gewährleistet werden kann.

Die DE 10 2010 041 876 A1 beschreibt ein Verfahren, bei welchem eine Öffnung in einem Gussteil, welche durch das mechanische Entfernen einer Gusshaut entstanden ist, mit einem Verschlussteil wieder verschlossen wird.

Aus der US 2004/060964 A1 ist bereits ein Verfahren bekannt, bei welchem ein Stopfen in einer Öffnung eines Gussteiles angeordnet und nachfolgend durch Reibschweißen mit einem die Öffnung umgebender Randbereich des Gussteiles verschweißt wird.

Die EP 1 510 280 A1 beschreibt bereits eine Vorrichtung und eine Verfahren zum Verschweißen von Bauteilen durch Reibrührschweißen.

Weiterhin ist in der WO2013/185986 A1 ein Verfahren zum Verschließen eines Kühlkanals einer Getränkeverpackungsmaschine offenbart, bei welchem ein in dem Kühlkanal angeordneter Stopfen durch Reibrührschweißen verschweißt wird.

Außerdem ist durch die EP1 688 207 A1 ein Verfahren bekannt, bei welchem ein eine Öffnung in einem Bauteil verschließender Deckel durch Reibrührschweißen mit dem Bauteil verschweißt wird.

Der Erfindung liegt die Aufgabe zugrunde, ein alternatives Verfahren zu schaffen, mittels welchem eine Kernlageröffnung in einem einen Hohlraum aufweisenden Gussteil fluid- und druckdicht verschlossen werden kann.

Diese Aufgabe wird gelöst mit einem Verfahren gemäß den Merkmalen des Patentanspruches 1. Die Unteransprüche betreffen besonders zweckmäßige Weiterbildungen der Erfindung.

Erfindungsgemäß ist also ein Verfahren zum Verschließen einer Kernlageröffnung eines einen Hohlraum aufweisenden Gussteiles vorgesehen, bei welchem zunächst ein Stopfen derart in der Kernlageröffnung des Gussteiles angeordnet wird, dass zumindest ein Abschnitt des Stopfens in die Kernlageröffnung eingreift und dass anschließend der in der Kernlageröffnung angeordnete Stopfen und ein die Kernlageröffnung umgebender Randbereich des Gussteiles fluiddicht miteinander verschweißt werden. Hierdurch wird eine gegenüber dem eingangs genannten Stand der Technik alternative Möglichkeit zum Verschließen von Kernlageröffnungen in Gussteilen angegeben. Durch das Verschweißen kann eine stoffschlüssige und metallurgische Verbindung zwischen dem Gussteilmaterial und dem Stopfenmaterial gewährleistet und dadurch ein fluid- und druckdichter Verschluss der Kernlageröffnung zur Verfügung gestellt werden. In vorteilhafter Weise kann die zeitaufwändige vorgeschaltete mechanische Bearbeitung und anschließende Reinigung der Kernlageröffnung bzw. des Gussteiles entfallen und dadurch können Produktionskosten gesenkt werden

Ein weiteres erfindungsgemäßes Merkmal besteht auch darin, dass der Stopfen und der die Kernlageröffnung umgebende Randbereich des Gussteiles durch Reibrührschweißen miteinander verschweißt werden. Beim Reibrührschweißen wird das Material des Stopfens und das Material des die Kernlageröffnung umgebenden Gussteiles durch Reibung zwischen einem rotierenden und mit einer Anpresskraft gegen die Verbindungspartner gedrückten Stempel oder Stift erwärmt, lokal plastifiziert und verrührt, sodass sich die Verbindungspartner in einem Warmformprozess verbinden. Eine besondere Nahtvorbereitung und Schweißzusätze werden hierbei nicht benötigt.

Da das Reibrührschweißen im Gegensatz zu konventionellen Schmelz-Schweißverfahren bei Temperaturen unterhalb des Schmelzpunktes von Leichtmetalllegierungen erfolgt, werden nachteilige Gefügeveränderungen sowie Lunker und andere Fehlstellen beim Erstarren der Schmelze vermieden. Außerdem entsteht nur ein geringer Verzug und es entstehen keine bzw. kaum Spritzer. Dadurch können auch höherfeste Aluminiumlegierungen ohne Zusatzwerkstoff und ohne große Festigkeitsverluste verschweißt werden. Durch die geringen Investitionskosten bei der maschinellen Ausrüstung kann ein wirtschaftliches Schweißverfahren zur Verfügung gestellt werden. Außerdem lassen sich durch das Reibrührschweißen auch unterschiedliche Leichtmetalllegierungen miteinander verbinden.

Für einen nachfolgenden Schweißvorgang hat es sich als besonders zweckmäßig erwiesen, dass der Stopfen nach einer Positionierung in der Kernlageröffnung mit einer Kraft beaufschlagt wird, durch welche der Stopfen in die Kernlageröffnung eingetrieben und kraftschlüssig in dieser angeordnet wird. Durch das kraftschlüssige Verpressen des Stopfens in der Kernlageröffnung wird eine Relativbewegung zwischen dem Stopfen und dem Gussteil während des nachfolgenden Schweißvorganges ohne zusätzliche Halte- bzw. Fixiermittel verhindert.

Eine weitere vorteilhafte Ausbildung des Verfahrens wird auch dadurch erreicht, dass der Stopfen derart in die Kernlageröffnung eingetrieben wird, dass eine mit der Kraft beaufschlagte Oberfläche des Stopfens gegenüber einer Oberfläche des die Kernlageröffnung umgebenden Randbereiches einen Überstand aufweist. Dabei sollte der Überstand zwischen 0,3 und 1,0 mm betragen. Durch den Überstand wird zusätzliches Material zum Aufschmelzen und zur Ausbildung der Schweißnaht bzw. des Schweißgutes zur Verfügung gestellt, sodass die Oberfläche des Schweißgutes nach dem Schweißvorgang in etwa auf dem Niveau der Oberfläche des umgebenden Randbereiches des Gussteiles angeordnet ist.

Für eine prozesssichere und dichte Verbindung zwischen dem Gussmaterial und dem Stopfenmaterial erweist es sich als besonders vorteilhaft, dass der Stopfen und das den Hohlraum aufweisende Gussteil aus artgleichem Material bestehen. Hierdurch ergibt sich beim Schweißen eine besonders vorteilhafte Aufmischung zwischen Gussmaterial und Stopfenmaterial. Bei einer Ausbildung des Gussteiles als Zylinderkopf oder Zylinderkurbelgehäuse bestehen Gussteil und Stopfen beispielsweise aus Aluminium bzw. einem Leichtmetall oder aus einer Aluminiumlegierung bzw. einer Leichtmetalllegierung. In Abhängigkeit der Verwendung des Gussteiles können selbstverständlich auch andere Gusswerkstoffe verwendet werden. Durch die Verwendung von Stopfen aus artgleichem Material werden im Vergleich zum eingangs genannten Stand der Technik auch die Kosten reduziert, da keine Deckel aus Edelstahl mehr benötigt werden.

Weiterhin erweist es sich als besonders zweckmäßig, dass der Stopfen aus Vollmaterial besteht. Hierdurch wird ausreichend Material für die Aufmischung bzw. Verbindung mit dem Gussteilmaterial zur Verfügung gestellt, sodass die Bildung von Poren und Rissen in der Schweißverbindung bzw. im Schweißgut wirksam verhindert werden kann.

Das Einführen des Stopfens in die Kernlageröffnung wird auch dadurch vereinfacht, dass der Stopfen und die Kernlageröffnung rotationssymmetrisch ausgebildet sind. Bevorzugt weist der Stopfen eine zylindrische Form auf. Dadurch, dass eine Querschnittsfläche des Stopfens zumindest abschnittsweise größer ist als eine Querschnittsfläche der Kernlageröffnung, weist der Stopfen gegenüber der Kernlageröffnung ein Übermaß auf, durch welches ein Herausfallen des Stopfens aus der Kernlageröffnung nach der Positionierung in dieser verhindert wird.

Hierbei kann der Stopfen oder die Kernlagerung auch leicht konisch ausgebildet sein. Hierdurch wird das Einführen des Stopfens in die Kernlageröffnung erleichtert und ein Durchfallen des Stopfens durch die Kernlageröffnung hindurch kann wirksam verhindert werden. Erfindungsgemäß ist weiter vorgesehen, dass beim Reibrührschweißen ein rotierender Stempel mit einer axialen Anpresskraft in den Stumpfstoß zwischen dem Stopfen und dem die Kernlageröffnung umgebenden Randbereich des Gussteiles gedrückt und entlang einer dem Umfang des Stopfens folgenden Fügelinie bewegt wird, wobei ein Startpunkt und ein Endpunkt der Fügelinie in dem die Kernlageröffnung umgebenden Randbereich des Gussteiles liegen. Der Startpunkt und der Endpunkt der Fügelinie liegen also außerhalb des Stopfens. Im Vergleich zu anderen möglichen Fügelinien ergibt sich eine glatte Oberfläche mit einer geringen Gratbildung. Außerdem wird das Material des Stopfens nicht durch die Kernlageröffnung hindurch in den Hohlraum gedrückt. Durch die beschriebene Fügelinie wird die Kernlageröffnung fluid- und druckdicht verschlossen, wobei die Schweißung keine Lunker und Fehlstellen, wie Poren oder Risse, aufweist.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: ein Gussteil mit einem Hohlraum und mehreren Kernlageröffnungen in einer Ansicht in den Hohlraum hinein;
- Fig. 2: die einzelnen aufeinanderfolgenden Verfahrensschritte des erfindungsgemäßen Verfahrens in einer stark vereinfachten Prinzipskizze;
- Fig. 3: eine Kernlageröffnung in einer perspektivischen Ansicht;
- Fig. 4: einen in der Kernlageröffnung positionierten Stopfen in einer perspektivischen Ansicht;
- Fig. 5: einen in die Kernlageröffnung eingetriebenen und kraftschlüssig angeordneten Stopfen in einer perspektivischen Ansicht;
- Fig. 6: eine mittels des erfindungsgemäßen Verfahrens verschlossene Kernlageröffnung in einer geschnittenen Darstellung;
- Fig. 7: eine weitere geschnittene Darstellung einer mittels des erfindungsgemäßem Verfahrens verschlossenen Kernlageröffnung;
- Fig. 8: eine erste Ausführungsform einer Fügelinie während des Reibrührschweißens;
- Fig. 9: eine zweite Ausführungsform einer Fügelinie während des Reibrührschweißens.

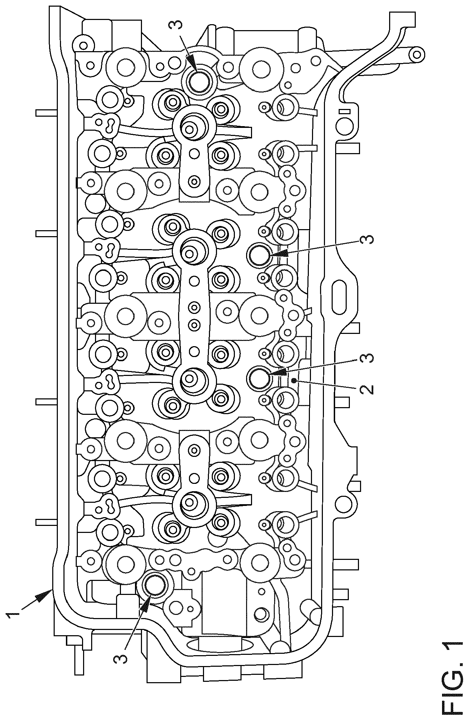

Figur 1 zeigt ein als Zylinderkopf ausgebildetes Gussteil 1 aus einer Aluminiumlegierung mit einem Hohlraum 2 und mehreren Kernlageröffnungen 3 in einer Ansicht in den Hohlraum 2 hinein.

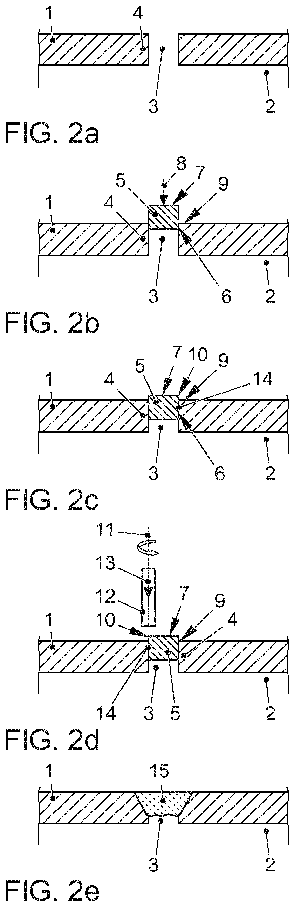

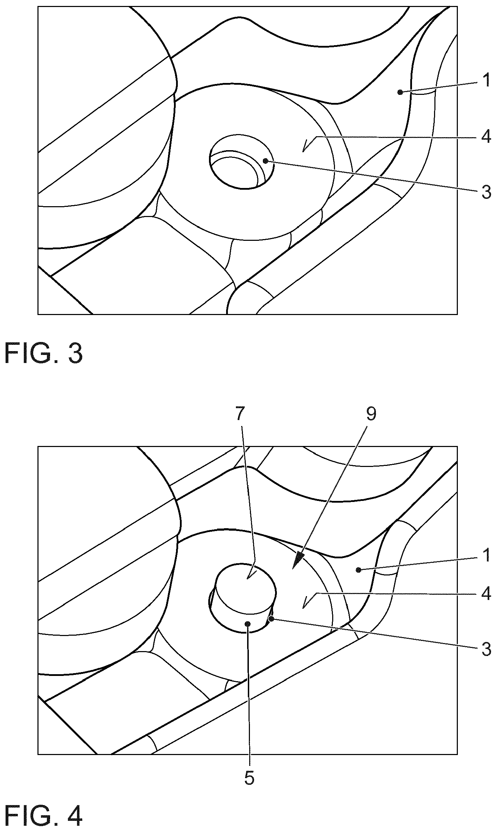

Anhand der Figuren 2 bis 9 wird nachfolgend das erfindungsgemäße Verfahren zum Verschließen der Kernlageröffnungen 3 des Gussteiles 1 näher erläutert. Figur 2a) und Figur 3 zeigen jeweils eine einzige Kernlageröfffnung 3, welche von einem Randbereich 4 des Gussteiles 1 begrenzt ist und druck- und fluiddicht verschlossen werden soll.

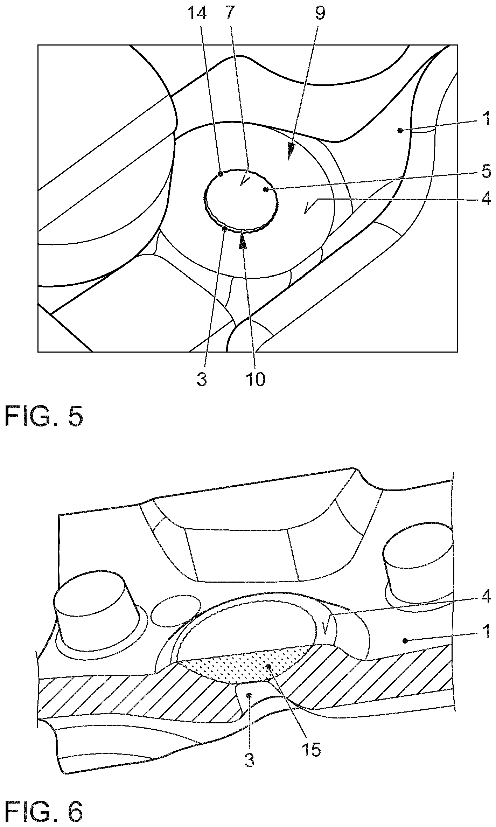

Zunächst wird ein zylindrisch ausgebildeter Stopfen 5, welcher aus derselben Aluminiumlegierung besteht wie das Gussteil 1, derart in der Kernlageröffnung 3 positioniert, dass zumindest ein unterer Abschnitt 6 des Stopfens 5 in die Kernlageröffnung 3 eingreift (Figur 2b) und Figur 4). Anschließend wird eine dem unteren Abschnitt 6 abgewandte stirnseitige Oberfläche 7 des aus Vollmaterial bestehenden Stopfens 5 mit einer Kraft 8 beaufschlagt. Hierdurch wird der Stopfen 5 derart in die Kernlageröffnung 3 eingetrieben, dass dieser, wie in Figur 2c) und Figur 5 dargestellt, kraftschlüssig in der Kernlageröffnung 3 angeordnet bzw. verpresst ist. Dabei weist die Oberfläche 7 des Stopfens 5 gegenüber einer Oberfläche 9 des die Kernlageröffnung 3 umgebenden Randbereiches 4 einen Überstand 10 auf. Neben dem dargestellten axialen Überstand 10 kann sich dieser auch radial ausbilden.

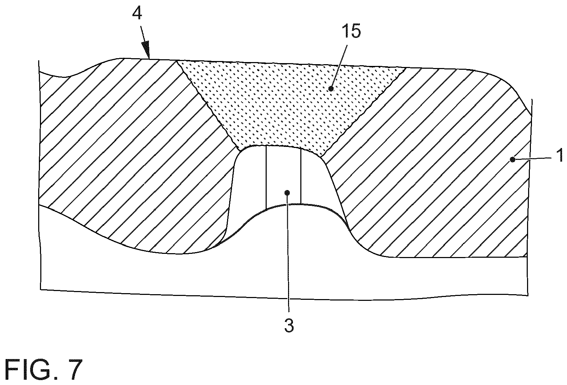

Anschließend werden der Stopfen 5 und der Randbereich 4 des Gussteiles 1 fluiddicht miteinander verschweißt. Bei dem dargestellten Ausführungsbeispiel erfolgt das Verschweißen durch Reibrührschweißen. Beim Reibrührschweißen wird, wie in Figur 2d) dargestellt, ein um eine Achse 11 rotierender Stempel 12 mit einer Anpresskraft 13 gegen einen Stumpfstoß 14 zwischen dem Stopfen 5 und dem Randbereich 4 des Gussteiles 1 gerichtet und dabei entlang des Stumpfstoßes verfahren. Durch die Rotation des Stempels 12 und die gegen die beiden Verbindungspartner gerichtete Anpresskraft 13 werden sowohl das Material des Stopfens 5 als auch das Material des Gussteiles 1 im Randbereich 4 erwärmt und miteinander verrührt, sodass sich das in Figur 2e) und Figur 6 und 7 dargestellte und die Kernlageröffnung 3 verschließende Schweißgut 15 ausbildet.

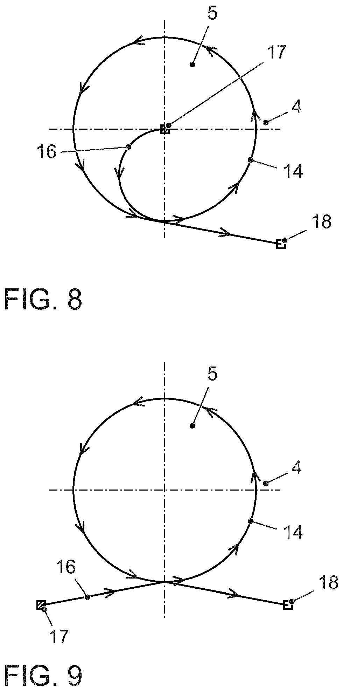

Während des Reibrührschweißens wird der Stempel 12 in einer vorbestimmten Fügelinie 16 relativ zu dem Stopfen 5 bzw. dem Gussteil 1 verfahren. Figur 8 zeigt eine Fügelinie 16, bei welcher ein Startpunkt 17 des nicht dargestellten Stempels 12 mittig im Stopfen 5 liegt. Von diesem Startpunkt 17 ausgehend wird der rotierende Stempel 12 dann umlaufend um den Stopfen 5 herum bewegt. Ein Endpunkt 18 der Fügelinie 16 liegt dann außerhalb des Stopfens 5 in dem umgebenden Randbereich 4 des Gussteiles 1.

Figur 9 zeigt eine andere bevorzugte Fügelinie 16, bei welcher sowohl der Startpunkt 17 als auch der Endpunkt 18 außerhalb des Stopfens 5 in dem umgebenden Randbereich 4 des Gussteiles 1 liegen. Ausgehend vom Startpunkt 17 wird der Stempel 12 auch bei dieser Fügelinie 16 umlaufend um den Stopfen 5 herum bewegt und bis zum Endpunkt 18 geführt.

### Bezugszeichenliste

- 1: Gussteil
- 2: Hohlraum
- 3: Kernlageröffnung
- 4: Randbereich
- 5: Stopfen

- 6: Abschnitt
- 7: Oberfläche
- 8: Kraft
- 9: Oberfläche
- 10: Überstand

- 11: Achse
- 12: Stempel
- 13: Anpresskraft
- 14: Stumpfstoß
- 15: Schweißgut

- 16: Fügelinie
- 17: Startpunkt
- 18: Endpunkt

## Patentansprüche

1. Verfahren zum Verschließen einer Kernlageröffnung (3) eines einen Hohlraum (2) aufweisenden Gussteiles (1), bei welchem zunächst ein Stopfen (5) derart in der Kernlageröffnung (3) des Gussteiles (1) angeordnet wird, dass zumindest ein Abschnitt (6) des Stopfens (5) in die Kernlageröffnung (3) eingreift und dass der Stopfen (5) nach einer Positionierung in der Kernlageröffnung (3) mit einer Kraft (8) beaufschlagt wird, durch welche der Stopfen (5) in die Kernlageröffnung (3) eingetrieben und kraftschlüssig in dieser verpresst wird, wobei der Stopfen (5) derart in die Kernlageröffnung (3) eingetrieben wird, dass eine mit der Kraft (8) beaufschlagte Oberfläche (7) des Stopfens (5) gegenüber einer Oberfläche (9) des die Kernlageröffnung (3) umgebenden Randbereiches (4) einen Überstand (10) aufweist und dass anschließend der in der Kernlageröffnung (3) angeordnete Stopfen (5) und ein die Kernlageröffnung (3) umgebender Randbereich (4) des Gussteiles (1) fluiddicht miteinander verschweißt werden, wobei der Stopfen (5) und der die Kernlageröffnung (3) umgebende Randbereich (4) des Gussteiles (1) durch Reibrührschweißen miteinander verschweißt werden.

2. Verfahren nach Anspruch 1, **dadurch gekennzeichnet, dass** der Stopfen (5) und das den Hohlraum (2) aufweisende Gussteil (1) aus artgleichem Material bestehen.

3. Verfahren nach den Ansprüchen 1 oder 2, **dadurch gekennzeichnet, dass** der Stopfen (5) aus Vollmaterial besteht.

4. Verfahren nach zumindest einem der vorangehenden Ansprüche, **dadurch gekennzeichnet, dass** der Stopfen (5) und die Kernlageröffnung (3) rotationssymmetrisch ausgebildet sind.

5. Verfahren nach zumindest einem der vorangehenden Ansprüche, **dadurch gekennzeichnet, dass** eine Querschnittsfläche des Stopfens (5) zumindest abschnittsweise größer ist als eine Querschnittsfläche der Kernlageröffnung (3).

6. Verfahren nach zumindest einem der vorangehenden Ansprüche, **dadurch gekennzeichnet, dass** der Stopfen (5) und/oder die Kernlageröffnung (3) konisch ausgebildet sind.

7. Verfahren nach zumindest einem der vorangehenden Ansprüche, **dadurch gekennzeichnet, dass** beim Reibrührschweißen ein rotierender Stempel (12) mit einer axialen Anpresskraft (13) in einen Stumpfstoß (14) zwischen dem Stopfen (5) und dem die Kernlageröffnung (3) umgebenden Randbereich (4) des Gussteiles (1) gedrückt und entlang einer dem Umfang des Stopfens (5) folgenden Fügelinie (16) bewegt wird, wobei ein Startpunkt (17) und ein Endpunkt (18) der Fügelinie (16) in dem die Kernlageröffnung (3) umgebenden Randbereich (4) des Gussteiles (1) liegen.

## Claims

1. Method for closing a core bearing opening (3) of a cast part (1) having a cavity (2), in which first a plug (5) is arranged in the core bearing opening (3) of the cast part (1) in such a way that at least a portion (6) of the plug (5) engages in the core bearing opening (3) and that, after a positioning in the core bearing opening (3), the plug (5) is subjected to a force (8) by which the plug (5) is driven into the core bearing opening (3) and is pressed in a frictionally engaging manner in this opening, wherein the plug (5) is driven into the core bearing opening (3) in such a way that a surface (7) of the plug (5) that is subjected to the force (8) has a projection (10) with respect to a surface (9) of the peripheral region (4) surrounding the core bearing opening (3) and that subsequently the plug (5) arranged in the core bearing opening (3) and a peripheral region (4) of the cast part (1) surrounding the core bearing opening (3) are welded to one another in a fluid-tight manner, wherein the plug (5) and the peripheral region (4) of the cast part (1) surrounding the core bearing opening (3) are welded to one another by means of friction stir welding.

2. Method according to Claim 1, **characterized in that** the plug (5) and the cast part (1) having the cavity (2) consist of the same type of material.

3. Method according to either of Claims 1 and 2, **characterized in that** the plug (5) consists of solid material.

4. Method according to at least one of the preceding claims, **characterized in that** the plug (5) and the core bearing opening (3) are rotationally symmetrically formed.

5. Method according to at least one of the preceding claims, **characterized in that** a cross-sectional area of the plug (5) is greater at least in certain portions than a cross-sectional area of the core bearing opening (3).

6. Method according to at least one of the preceding claims, **characterized in that** the plug (5) and/or the core bearing opening (3) are conically formed.

7. Method according to at least one of the preceding claims, **characterized in that**, during the friction stir welding, a rotating pin (12) presses with an axial pressing force (13) into a butt joint (14) between the plug (5) and the peripheral region (4) of the cast part (1) surrounding the core bearing opening (3) and is moved along a joint line (16) following the circumference of the plug (5), wherein a starting point (17) and an end point (18) of the joint line (16) lie in the peripheral region (4) of the cast part (1) surrounding the core bearing opening (3).

## Revendications

1. Procédé de fermeture d'une ouverture de portée de noyau (3) d'une pièce moulée (1) présentant un espace creux (2), dans lequel on dispose d'abord un bouchon (5) dans l'ouverture de portée de noyau (3) de la pièce moulée (1), de telle manière qu'au moins une partie (6) du bouchon (5) s'engage dans l'ouverture de portée de noyau (3) et que le bouchon (5) soit, après un positionnement dans l'ouverture de portée de noyau (3), soumis à une force (8), par laquelle le bouchon (5) est enfoncé dans l'ouverture de portée de noyau (3) et est ajusté par adhérence dans celle-ci, dans lequel on enfonce le bouchon (5) dans l'ouverture de portée de noyau (3) de telle manière qu'une surface (7) du bouchon (5) soumise à la force (8) présente un dépassement (10) par rapport à une surface (9) de la région de bord (4) entourant l'ouverture de portée de noyau (3) et qu'ensuite le bouchon (5) agencé dans l'ouverture de portée de noyau (3) et une région de bord (4) de la pièce moulée (1) entourant l'ouverture de portée de noyau (3) soient soudés l'un à l'autre de façon étanche au fluide, dans lequel le bouchon (5) et la région de bord (4) de la pièce moulée (1) entourant l'ouverture de portée de noyau (3) sont soudés l'un à l'autre par soudage par friction-malaxage.

2. Procédé selon la revendication 1, **caractérisé en ce que** le bouchon (5) et la pièce moulée (1) présentant l'espace creux (2) sont composés d'un matériau de même nature.

3. Procédé selon les revendications 1 ou 2, **caractérisé en ce que** le bouchon (5) est composé d'un matériau plein.

4. Procédé selon au moins une des revendications précédentes, **caractérisé en ce que** le bouchon (5) et l'ouverture de portée de noyau (3) sont de forme symétrique de révolution.

5. Procédé selon au moins une des revendications précédentes, **caractérisé en ce qu'**une aire de section transversale du bouchon (5) est au moins en partie plus grande qu'une aire de section transversale de l'ouverture de portée de noyau (3).

6. Procédé selon au moins une des revendications précédentes, **caractérisé en ce que** le bouchon (5) et/ou l'ouverture de portée de noyau (3) sont de forme conique.

7. Procédé selon au moins une des revendications précédentes, **caractérisé en ce que** lors du soudage par friction-malaxage, on presse un poinçon tournant (12) avec une force de pression axiale (13) en un joint bord à bord (14) entre le bouchon (5) et la région de bord (4) de la pièce moulée (1) entourant l'ouverture de portée de noyau (3) et on le déplace le long d'une ligne de jonction (16) suivant le contour du bouchon (5), dans lequel un point de départ (17) et un point d'arrivée (18) de la ligne de jonction (16) sont situés dans la région de bord (4) de la pièce moulée (1) entourant l'ouverture de portée de noyau (3).
